# DEMANDE DE BREVET EUROPEEN

(11) **EP 4 834 672 A1**
(43) Date de publication de la demande: **04.11.2026**
(21) Numéro de dépôt: 26175844.5
(22) Date de dépôt: 30.04.2026
(51) Int. Cl.: B60R 21/2338, B60R 22/18, B60R 22/26

(54) **SIEGE DE VEHICULE AUTOMOBILE EQUIPE DE COUSSINS GONFLABLES DOMAINE TECHNIQUE DE L'INVENTION**

(30) Priorité: 02.05.2025 FR 2504683
(71) Demandeur: Renault s.a.s, 92100 Boulogne Billancourt (FR)
(72) Inventeur: LESBATS, Fabrice, 78280 GUYANCOURT (FR); RUFFET, Renaud, 78280 GUYANCOURT (FR); LECROISEY, Sébastien, 78280 GUYANCOURT (FR)

(57) **Abrégé**

L'invention concerne un siège de véhicule automobile comportant un dossier, une assise, et un dispositif de retenue d'un occupant du siège qui comprend :
- au moins un coussin gonflable de sécurité qui, lorsqu'il est gonflé, est adapté à se déployer sur le côté au moins de l'occupant, et
- au moins une bride comprenant une extrémité fixée au dossier et une autre extrémité fixée à l'assise.

Selon l'invention, le siège comporte au moins un fourreau allongé (60, 65) qui est fixé au moins en partie sur l'assise, qui loge au moins en partie ladite bride, et qui présente sur une majeure partie de sa longueur une zone d'extraction de ladite bride.

## Description

### DOMAINE TECHNIQUE DE L'INVENTION

La présente invention concerne de manière générale la sécurité des passagers de véhicules automobiles.

Elle concerne plus particulièrement un siège de véhicule automobile, comportant un dossier, une assise qui comprend une ossature recouverte d'une garniture, un système de ceinture de sécurité comprenant deux points d'ancrage d'une sangle de ceinture situés de part et d'autre de l'ossature de l'assise, et un dispositif de retenue d'un occupant du siège, lequel dispositif de retenue comprend :
- au moins un coussin gonflable de sécurité qui, lorsqu'il est gonflé, est adapté à se déployer sur le côté au moins de l'occupant, et
- au moins une bride comprenant une extrémité fixée au dossier et une autre extrémité fixée à l'assise.

Elle concerne également un véhicule automobile équipé d'un tel siège, ainsi qu'un procédé de fabrication d'un tel siège.

### ETAT DE LA TECHNIQUE

Actuellement, les airbags sont logés dans le volant du véhicule, dans le tableau de bord et au-dessus des fenêtres (on parle d'airbag rideau), afin de pouvoir se déployer autour du conducteur et du passager avant en cas de choc.

Les emplacements de ces airbags ne sont pas idéaux puisqu'ils occupent une place importante au sein de la planche de bord et du volant. Les airbags rideaux occupent également beaucoup de place, occasionnant des pertes de volumes pour l'implantation des poignées de pavillon ou encore pour obtenir une largeur maximale de toit ouvrant.

En outre, dans le cadre de l'autonomisation des véhicules automobiles, il s'avère nécessaire de revoir cet agencement, pour tenir compte du fait que le conducteur ne se tiendra plus nécessairement face à la route, volant entre les mains, mais qu'il pourra adopter des attitudes différentes.

Dans cette perspective, une nouvelle catégorie d'airbags dits « cocoons » a commencé à être développée par la demanderesse. Il s'agit d'airbags qui viennent se positionner de part et d'autre de l'occupant.

Ainsi, on connaît notamment du document FR3131258 un siège équipé, dans chacun des deux flancs de son dossier, d'un coussin gonflable. Ces deux coussins sont prévus pour se gonfler en cas de choc de telle façon qu'ils se déploient de part et d'autre de l'occupant du siège puis devant lui.

Pour s'assurer que les deux coussins se gonflent dans la position souhaitée, ce document explique que deux sangles sont cousues sur chaque coussin. Chaque sangle présente une extrémité supérieure fixée au dossier et une extrémité inférieure fixée à l'ossature de l'assise, et plus précisément à une traverse dite anti-sous-marinage.

Chaque sangle est initialement logée dans le siège, en passant pour cela le long d'un côté de l'assise et du dossier.

Elle est dès lors plus longue que nécessaire pour assurer sa fonction de positionnement du coussin lors du gonflage de ce dernier. A titre d'exemple, la longueur d'une sangle est de l'ordre de 1,3 m afin de pouvoir être correctement rangée dans le siège, alors que sa longueur utile pour pouvoir guider efficacement le sac gonflable lors de son gonflement est de l'ordre de 1 m.

La solution présentée dans le document FR3131258 pour résoudre ce problème de longueur consiste à prévoir dans le coussin gonflable une poche supplémentaire qui, lors du gonflage du coussin, permet de tendre la sangle de façon à ce que cette dernière puisse assurer sa fonction.

Cette solution s'avère malheureusement contraignante puisqu'elle requiert des coussins de plus grandes tailles, davantage d'air pour les gonfler, et que les sangles ne sont tendues qu'en fin de gonflage, si bien qu'elles ne peuvent assurer correctement leur fonction pendant le gonflage des coussins.

Ce document ne propose par ailleurs pas de solution particulière pour s'assurer que les sangles s'extraient sans difficulté de l'assise et du dossier. En effet, lorsque les brides sont encore lâches, elles risquent de se prendre dans des éléments du véhicule, notamment dans les leviers de réglage de la position du siège ou les moyens d'ancrage de la ceinture de sécurité, ce qui peut s'avérer particulièrement dangereux. En outre la bride et le système de ceinture de sécurité peuvent se gêner, ce qui est également source de problèmes.

### PRESENTATION DE L'INVENTION

Afin de remédier aux inconvénients précités de l'état de la technique, la présente invention propose de placer les brides sur les côtés de l'assise et, préférentiellement, d'équiper le siège de fourreaux pouvant accueillir les sangles (en l'absence de choc).

Plus particulièrement, on propose selon l'invention un siège tel que défini dans l'introduction, dans lequel, au repos, c'est-à-dire lorsque le coussin gonflable de sécurité n'est pas gonflé (i.e. que le gonflement n'a pas été déclenché), l'un au moins des points d'ancrage ou la partie de sangle de ceinture qui prolonge le point d'ancrage est situé entre la bride et l'ossature de l'assise.

Ainsi, le système de sécurité sera situé du côté intérieur du siège par rapport aux brides. De ce fait, lors du gonflement des coussins et du déploiement des brides, ces dernières pourront librement, sans être gêné par la sangle de ceinture de sécurité ou par un de ses moyens d'ancrage.

Préférentiellement, il est prévu au moins un fourreau allongé qui est fixé au moins en partie sur l'assise, qui loge au moins en partie ladite bride, et qui présente sur une majeure partie de sa longueur une zone d'extraction de ladite bride.

Le ou les fourreaux assurent ainsi différentes fonctions.

Leur première fonction est de garantir une extraction efficace des brides lors du gonflement des coussins gonflables de sécurité. Ils permettent en effet aux brides de glisser sans effort dans les fourreaux et d'en sortir sans difficulté, notamment sans risque d'accrochage à d'autres composants du véhicule. Ainsi libérées, les brides peuvent garantir un déploiement optimal et un positionnement précis des coussins gonflables.

On notera à cet égard que les fourreaux s'avèrent particulièrement avantageux lorsque les brides sont reliées, à une extrémité, à des prétensionneurs. L'activation de ces derniers génère en effet un mouvement de coulissement des brides, ce qui ne pose pas de difficulté ou de danger compte tenu des fourreaux à l'intérieur desquels les brides peuvent coulisser librement.

Leur seconde fonction est de protéger les brides au cours de la durée de vie normale du véhicule (c'est-à-dire en l'absence de choc déclenchant le gonflement des coussins gonflables de sécurité), notamment lorsque l'occupant ajuste l'inclinaison du dossier par rapport à l'assise.

Leur troisième fonction est de garantir un bon positionnement des brides lors de l'assemblage du siège. Contrairement aux brides, les fourreaux peuvent en effet comporter des éléments spécifiquement conçus pour faciliter leur mise en place sur l'ossature du siège dans une position optimale. On notera d'ailleurs que les fourreaux peuvent éventuellement permettre de monter les brides sur le siège assez tard dans le processus d'assemblage du siège (et notamment après l'installation des fourreaux), les fourreaux permettant en effet une installation des brides par un mouvement de coulissement le long de ces fourreaux. Enfin, ces fourreaux sont très adaptables, en ce sens qu'ils peuvent être intégrés à tout type de siège, notamment aux sièges dont les mobilités sont à commande manuelle et/ou électrique.

D'autres caractéristiques avantageuses et non limitatives du siège conforme à l'invention, prises individuellement ou selon toutes les combinaisons techniquement possibles, sont les suivantes :
- ladite zone d'extraction est formée par une fente qui s'étend sur une majeure partie de la longueur du fourreau allongé (i.e. plus de 50% de sa longueur), et préférentiellement sur l'ensemble de la longueur du fourreau allongé ;
- le fourreau allongé présente deux bourrelets qui bordent ladite fente ;
- le fourreau allongé comporte un corps qui présente une forme sensiblement tubulaire ;
- le fourreau allongé est fixé en partie au dossier ;
- le dossier étant monté mobile par rapport à l'assise de façon à pouvoir basculer sur une course déterminée, le fourreau allongé est réalisé au moins en partie dans un matériau flexible qui se déforme élastiquement uniquement lors du basculement du dossier par rapport à l'assise sur l'ensemble de sa course ;
- l'une des extrémités de la bride est fixée à un prétensionneur ;
- il est prévu deux coussins gonflables de sécurité qui, lorsqu'ils sont gonflés, sont adaptés à se déployer de part et d'autre de l'occupant, au moins deux brides qui sont respectivement couplées aux deux coussins gonflables de sécurité, l'autre des points d'ancrage étant situé entre l'autre bride et l'ossature de l'assise ;
- il est prévu deux fourreaux allongés qui sont fixés au moins en partie sur l'assise, respectivement sur deux côtés opposés de l'assise, et qui logent respectivement les deux brides ;
- chaque bride est couplée à un coussin gonflable de sécurité, par exemple en passant au travers d'une ouverture ou d'un passant de ce coussin ou par exemple en étant fixé à ce coussin (typiquement via une couture) ;
- l'assise comportant une ossature qui comprend deux flancs connectés par des éléments de liaison, le fourreau allongé s'étend le long d'un bord supérieur de l'un des deux flancs, et préférentiellement aussi sur l'un des éléments de liaison.

L'invention concerne également un véhicule automobile comportant un plancher et un siège tel que précité, monté sur le plancher.

L'invention concerne également un procédé de fabrication d'un siège tel que précité, dont l'assise comporte une ossature recouverte d'une garniture, selon lequel le fourreau est fixé à l'ossature de l'assise, avant que la bride soit installée dans le fourreau, préférentiellement par un mouvement de coulissement de la bride dans ledit fourreau.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'un siège conforme à l'invention, sur laquelle les coussins sont représentés en position déployée ;
[Fig. 2] est une vue schématique en perspective d'une partie de l'ossature du siège de la figure 1 ;
[Fig. 3] est une vue schématique en perspective d'une extrémité d'un fourreau du siège de la figure 1.
[Fig. 4] est une vue schématique en perspective d'une extrémité d'un fourreau du siège de la figure 3 dans un mode de réalisation complémentaire.

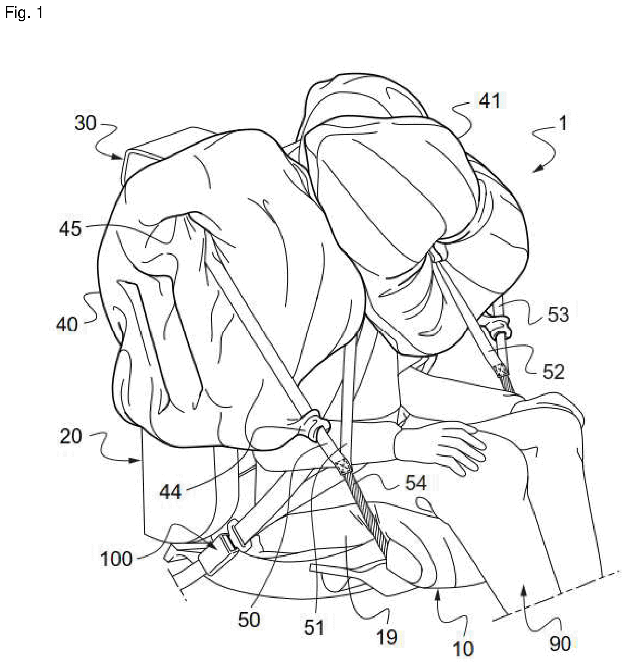

Sur la figure 1, on a représenté un siège 1 dans lequel est assis un occupant 90.

Ce siège 1 est ici installé dans l'habitacle d'une voiture. En variante, il pourrait être installé dans l'habitacle de tout autre type de véhicule automobile (camion, avion, wagon...).

Il s'agit ici du siège du conducteur de ce véhicule. Mais il pourrait aussi bien s'agir d'un autre des sièges du véhicule, notamment du siège passager (situé à côté du siège conducteur) ou même d'un siège situé à l'arrière du siège conducteur.

Dans la suite de la description, les termes « avant » et « arrière » seront utilisés par rapport au véhicule automobile, la partie avant d'un élément désignant la partie de cet élément qui est située du côté du capot du véhicule et la partie arrière désignant la partie de cet élément qui est située du côté opposé.

Les termes « inférieur » (ou « bas ») et « supérieu » (ou « haut ») seront utilisés de la même façon, la partie inférieure d'un élément désignant la partie de cet élément qui est située du côté du plancher du véhicule et la partie supérieure désignant la partie de cet élément qui est située du côté du toit du véhicule.

L'adjctif « longitudinal » s'appliquera à une direction ou un axe orienté de l'avant vers l'arrière du véhicule, parallèlement à la direction d'avance du véhicule lorsque le volant est en position neutre.

L'adjectif « transversal » s'appliquera à une direction ou un axe orienté orthogonalement aux axes longitudinaux et horizontalement lorsque le véhicule roule sur une route horizontale.

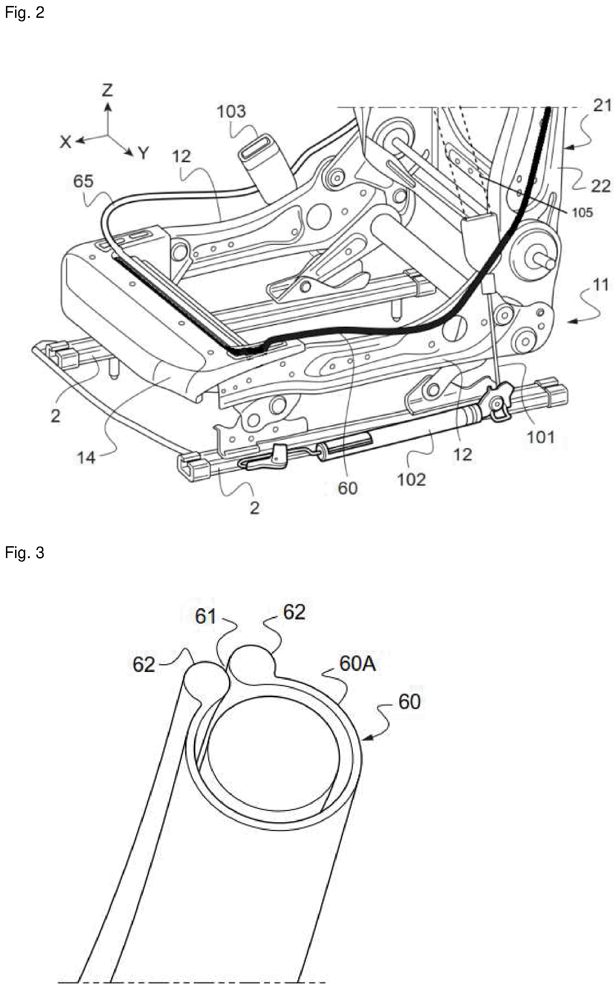

On a représenté sur la figure 2 un repère orthonormé dans lequel l'axe X est longitudinal et orienté vers l'avant, l'axe Y est transversal et orienté vers la gauche du véhicule, et l'axe Z est vertical.

Comme le montre la figure 1, le siège 1 comporte classiquement une assise 10 et un dossier 20 équipé d'un appui-tête 30. Le dossier et l'assise comprennent chacun une ossature, une garniture (ou mousse) rapportée sur l'ossature, et une housse couvrant la garniture.

La garniture du dossier et/ou de l'assise présente une partie centrale sensiblement plane, sur laquelle l'occupant peut principalement s'appuyer, et deux rebords latéraux qui sont situés de part et d'autre de la partie centrale et qui permettent de retenir l'occupant dans son siège lorsque le véhicule tourne.

L'ossature du dossier et/ou de l'assise est par exemple formée de pièces métalliques fixées ensemble.

Ici, on s'intéressera davantage à l'ossature 11 de l'assise 10. Comme le montre la figure 2, cette ossature 11 comporte dans cet exemple deux flancs latéraux 12 métalliques, connectés rigidement ensemble par des éléments de liaison métalliques. Les deux flancs latéraux 12 s'étendent dans des plans verticaux parallèles. Une nappe (non représentée) de retenue de la garniture, par exemple formée de fils métalliques entrecroisés, s'étend entre les deux flancs latéraux 12.

Parmi les éléments de liaison métalliques, il est prévu à l'arrière de l'ossature une barre transversale non représentée. Il est par ailleurs prévu à l'avant une traverse dite anti-sous-marinage 14.

On rappellera ici que le sous-marinage correspond au phénomène de glissement du bassin d'un occupant sous la ceinture de sécurité lors d'un choc frontal, ce qui peut lui occasionner des blessures graves, notamment abdominales.

La traverse anti-sous-marinage 14 est donc une structure intégrée à l'assise 10, qui a pour fonction de limiter le phénomène de sous-marinage.

Cette traverse anti-sous-marinage 14 pourrait se présenter sous des formes différentes. Il s'agit ici d'une plaque métallique emboutie fixées aux flancs latéraux 12, par exemple par rivetage, soudage ou vissage.

Cette plaque métallique emboutie présente une partie plane située sous la garniture 19 de l'assise 10, dont la face supérieure est inclinée vers l'arrière pour s'opposer au phénomène de sous-marinage.

Bien entendu, en variante, cette ossature 11, et notamment cette traverse anti-sous-marinage 14, pourrait se présenter autrement, par exemple sous la forme d'une coque en matière plastique fibrée.

La garniture est rapportée entre les flancs latéraux 12. Des flasques en matière plastique peuvent alors être rapportés sur les faces extérieures des flancs latéraux 12, afin de les masquer.

L'ossature 21 du dossier 20 présente une architecture similaire, avec deux flancs latéraux 22 métalliques, connectés rigidement ensemble par des éléments de liaison métalliques, dont une traverse inférieure 23.

Le siège 1 présente différentes mobilités.

Ici, l'assise 10 est prévue pour être montée mobile en hauteur sur le plancher du véhicule et mobile d'avant en arrière sur le plancher.

Le siège 1 comporte par exemple à cet effet deux glissières 2 et un système de rehausse standards, ici mécanique (mais qui pourrait en variante être à commande électrique).

Les glissières 2 comportent ici deux rails fixes et parallèles, fixés au plancher du véhicule, et deux rails montés mobiles en coulissement dans les rails fixes. Le système de rehausse comporte quant à lui des bielles connectant l'ossature 11 aux rails mobiles.

En outre, le dossier 20 est monté sur l'ossature 11 de l'assise 10 avec une mobilité de basculement autour d'un axe transversal (l'axe Y), sur une course supérieure à 10 degrés. Il comporte des moyens de blocage et de réglage de cette mobilité, se présentant par exemple sous la forme d'une molette pivotante.

Le siège 1 est par ailleurs équipé d'un système de ceinture de sécurité 100 (Figure 1). Ce système de ceinture de sécurité pourrait être du type à deux points (avec une sangle ventrale qui s'attache de part et d'autre du bassin de l'occupant du siège) ou à trois points (avec une sangle dont une extrémité est fixée d'un premier côté du siège, au niveau de l'assise, dont l'autre s'enroule dans un enrouleur fixé au châssis du véhicule ou au dossier, de ce même premier côté, et qui s'attache par une boucle de l'autre côté du siège), voire à quatre points.

Il est ici à trois points. Comme le montre la figure 2, il comporte deux points d'ancrage 101, 103 situés de part et d'autre de l'assise 10. Ici, ces points d'ancrage sont fixés aux rails mobiles des glissières 2.

L'un des points d'ancrage 103 est une boucle de ceinture de sécurité. Il présente une forme de tulipe, avec une tige dont l'extrémité basse est fixée à l'une des glissières 2 et dont l'autre porte un bloc de réception et de verrouillage d'un pêne enfilé sur la sangle de la ceinture de sécurité.

L'autre des points d'ancrage 101 est une attache d'une extrémité de sangle de ceinture de sécurité. Il présente aussi une forme de tulipe, avec une tige dont l'extrémité haute porte un système de fixation de la sangle. L'extrémité basse de cette tige pourrait être fixée à l'autre glissière 2. Ici, elle est plutôt reliée à un prétensionneur 102 qui est fixé à cette autre glissière 2. Ce prétensionneur 102 est alors conçu pour tendre la sangle de ceinture de sécurité en cas d'accident.

En pratique, une extrémité de la sangle de ceinture de sécurité est fixée à l'extrémité haute de la tige de façon à la prolonger.

Le siège 1 est équipé d'un dispositif de retenue de l'occupant en cas de choc, c'est-à-dire d'un dispositif permettant de retenir le conducteur et d'amortir le choc qu'il ressent lorsque la voiture percute ou est percutée par un obstacle. Ici, ce dispositif de retenue est conçu pour assurer cette fonction quel que soit le type de choc (frontal, latéral, arrière, tonneaux...).

Ce dispositif de retenue est intégré au siège 1. Un avantage de cette intégration est que la position du siège dans l'habitacle (plus ou moins avancé et plus ou moins haut) est sans impact sur son fonctionnement.

Comme le montre la figure 1, le dispositif de retenue comporte au moins un système dit d'airbag. De façon très préférentielle, il en comporte deux.

Chaque système comporte au moins un coussin gonflable de sécurité, ci-après plus simplement appelé coussin 40, 41. On considérera que chaque système comporte ici un unique coussin 40, 41.

Ces deux coussins 40, 41 sont situés de part et d'autre du conducteur 20. A l'état non gonflé, ils sont en effet repliés dans les flancs du dossier. Lors de leur gonflage, ils sont prévus pour se déployer de part et d'autre de l'occupant 90 du siège 1.

Ici, ils présentent des formes différentes, l'un des coussins (côté portière) étant prévu pour se déployer à l'avant de la tête de l'occupant lorsque l'autre des coussins se déploie essentiellement sur un côté de l'occupant et devant l'une de ses épaules.

Bien entendu, en variante, les coussins pourraient présenter des formes différentes de celles illustrées sur la figure 1.

Chaque système d'airbag comporte en outre au moins une bride 50, 51, 52, 53 associée au coussin 40, 41.

Une « bride » est ici définie comme un élément allongé, souple mais non extensible selon sa longueur (ou très peu extensible, son allongement étant inférieure à 10% en cas de choc violent). Elle est de préférence réalisée par tissage ou torsion de fils en matière textile ou synthétique ou encore métallique. Une telle bride peut typiquement se présenter sous la forme d'une sangle (par exemple du type des sangles de ceinture de sécurité) ou d'une corde. Il peut ainsi par exemple s'agir d'un « strap » du type de ceux que l'on retrouve sur les airbags rideaux afin de stabiliser les zones de protection lors de leur déploiement.

La fonction de ces brides 50, 51, 52, 53 est de garantir le déploiement des coussins 40, 41 dans la position requise et/ou de retenir l'occupant 90 plaqué contre son siège 1 lors d'un choc.

Les brides 50, 51, 52, 53 sont dites « couplées » aux coussins 40, 41 en ce sens qu'elles sont cousues aux coussins et/ou qu'elles passent au travers de passants 44 fixés aux coussins ou d'ouvertures 45 prévus dans les coussins.

Une ouverture est ici définie comme une fenêtre au contour fermé pratiquée dans le coussin. Un passant 44 est pour sa part définie comme une pièce (par exemple de tissu) qui est attachée (par exemple cousue) sur l'un des coussins et qui délimite un passage pour une bride.

Ici, aucune des brides 50, 51, 52, 53 n'est cousue sur les coussins 40, 41, de façon à ce qu'elles restent libres de glisser sur les coussins.

On pourrait prévoir qu'une unique bride soit associée à chaque coussin. Toutefois, ici, chaque coussin 40, 41 est associé à deux brides 50, 51, 52, 53.

En pratique, l'une des deux brides 50, 53 associées à chaque coussin 40, 41 est prévue, lorsque ce coussin se gonfle, pour passer du côté extérieur du coussin par rapport à l'occupant 90, puis pour traverser une ouverture 45 pratiquée dans ce coussin afin de se rattacher par son extrémité supérieure à l'ossature du dossier 20. Sa fonction première est de positionner et retenir le coussin dans une position adéquate lors du choc.

L'autre des deux brides 51, 52 associées à chaque coussin et prévue pour passer entre le coussin et l'occupant 90, afin de s'appliquer contre l'épaule de l'occupant dans le but de le retenir contre le dossier 20.

Les deux brides 50, 51, 52, 53 associées à chaque coussin sont distinctes sur une partie haute de leurs longueurs. Elles se rejoignent en partie basse.

Les parties distinctes des brides sont ici formées par des sangles, alors que les parties basses communes des brides sont formées par des cordes 54.

Autrement formulé, les deux brides 50, 51, 52, 53 associées à chaque coussin comportent une partie basse commune en corde, qui se subdivise en deux parties hautes se présentant sous la forme de sangles.

Bien entendu, le nombre et les formes des brides pourraient être différents de ceux illustrés sur les figures.

De façon préférentielle, l'extrémité basse de chaque bride est fixée à un prétensionneur (non visible sur les figures).

On rappelle ici qu'un prétensionneur, également appelé prétendeur, est un dispositif de sécurité automobile qui permet, en cas d'accident, d'exercer une traction (ici sur les brides). Un tel prétensionneur est bien connu lorsqu'il est employé à une extrémité d'une sangle de ceinture de sécurité.

Techniquement, un prétensionneur se présente généralement sous la forme d'un vérin, avec un piston qui est adapté à coulisser dans un fourreau et qui est rattaché à la corde de la bride, directement ou via un accessoire tel qu'un câble ou une tige métallique. Un tel prétensionneur est équipé :
- d'un système d'actionnement adapté à exercer un effort de traction sur le piston (il peut par exemple s'agir d'un ressort précontraint, d'une cartouche de gaz sous pression, ou encore d'un dispositif pyrotechnique,) et
- d'un système de déclenchement du système d'actionnement en cas d'accident (qui comprend par exemple un accéléromètre).

Les prétensionneurs sont fixés sous la traverse anti-sous-marinage 14, par exemple via des colliers vissés ou rivetés sur cette traverse.

En l'absence de choc et donc de déclenchement du gonflement des coussins et des prétensionneurs des brides, les coussins 40, 41 sont respectivement repliés dans les deux rebords latéraux du dossier 20 du siège 1.

Les brides 50, 51, 52, 53 sont pour leur part stockées le long des rebords latéraux du dossier 20 et de l'assise 10 du siège 1.

Elles sont stockées de façon à passer à l'extérieur des points d'ancrage 101, 102 du système de ceinture de sécurité 100 par rapport à l'ossature 11 de l'assise 10. Ainsi, lorsqu'elles se déploient, elles ne sont pas gênées par ces points d'ancrage ou par la sangle de ceinture de sécurité.

Plus précisément, l'une des brides passe entre le pédoncule et l'ossature 11 de l'assise 10. L'autre des brides passe pour sa part :
- soit entre l'autre point d'ancrage 101 et l'ossature 11 de l'assise 10, comme cela est illustré en figure 2,
- soit entre la partie 105 de la sangle qui part de ce point d'ancrage et l'ossature 11 de l'assise 10 (par « partie 105 de sangle » on entend l'extrémité de la sangle fixée à ce point d'ancrage, par exemple les 20 cm de sangle qui partent de ce point d'ancrage). C'est notamment le cas si la tige de ce moyen d'ancrage est plus courte.

Pour garantir que leurs positions soient idéales en vue de leur déploiement, le siège 1 comporte au moins un fourreau allongé 60, 65 qui est fixé au moins en partie sur l'assise 10.

En pratique, il est ici prévu deux fourreaux allongés 60, 65 respectivement fixés sur les bords droit et gauche de l'assise 10.

Ces deux fourreaux allongés 60, 65 présentent des positions symétriques par rapport à un plan de symétrie du siège 1. Ainsi, seul l'un d'entre eux sera décrit.

Ce fourreau allongé 60 est prévu pour loger au moins une bride 50, 51, 52, 53. En l'espèce, il loge ici les deux brides qui sont associées au coussin 40, 41 du côté duquel le fourreau se trouve.

Comme cela sera décrit en détail ci-après, ce fourreau allongé 60 est ici fixé non seulement à l'assise 10 du siège 1, mais aussi au dossier 20.

Il présente, sur une majeure partie de sa longueur, une zone d'extraction par laquelle chaque bride 50, 51, 52, 53 qui y est logée peut sortir en cas de choc, notamment lorsque le coussin 40, 41 se gonfle et que le prétensionneur attaché à la bride est déclenché et exerce un effort de traction sur celle-ci.

Ici, comme le montre la figure 3, le fourreau allongé 60 se présente essentiellement sous la forme d'un tube 60A souple.

On entend par là qu'il délimite un conduit dans lequel une partie au moins de chacune des deux brides peut se loger.

Il s'étend longitudinalement le long d'une ligne moyenne centrale.

Ce fourreau allongé 60 est ici profilé, en ce sens qu'il présente des sections transversales de formes identiques le long de sa ligne moyenne. Il peut donc être fabriqué pour un coût restreint, par exemple par extrusion.

Ici, le tube 60A présente une section transversale en forme de C dont les deux bords viennent au contact l'un de l'autre.

La zone d'extraction des brides est alors formée par une fente 61 qui se situe entre les deux bords de ce C.

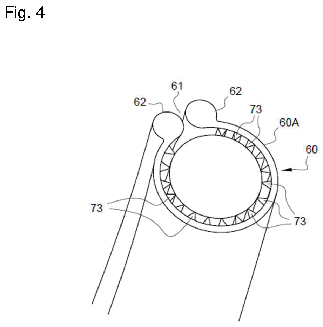

En variante, dans un mode de réalisation complémentaire illustré en [Fig. 4] le tube 60 comprend des plots intérieurs 73 en forme de triangle, facilitant le guidage et le support de la bride 50, 51, 52, 53 à l'intérieur du tube. L'extrémité triangulaire des plots permet un contact réduit avec la bride, ce qui diminue les frottements. Ces plots peuvent présenter de plus une extrémité triangulaire légèrement arrondie qui facilite le coulissement de la bride lors de son extraction.

En variante, le tube 60A pourrait présenter une section de contour fermé, en O, auquel cas la zone de plus faible résistance serait formée par une ligne sécable formée par exemple par un amincissement de la paroi du tube 60A.

Le caractère souple du tube lui est conféré par le matériau choisi pour sa fabrication. Comme cela sera bien décrit ci-après, il est prévu pour se déformer, de façon élastique uniquement, lorsque l'occupant modifie l'inclinaison du dossier par rapport à l'assise.

Il est alors par exemple réalisé en polypropylène, ou en caoutchouc EPDM, ou encore en poly téréphtalate d'éthylène (PET). D'autres matières ou combinaisons de matières sont bien entendu envisageables. Les plots intérieurs 73 peuvent être réalisés en en poly téréphtalate d'éthylène (PET) enrichi d'un lubrifiant solide permettant de réduire le coefficient de friction.

La souplesse du fourreau 60 facilite en outre sa mise en place sur les ossatures d'assise et de dossier du siège. Ainsi, avant sa mise en place, il peut par exemple être droit. Lors de sa mise en place, il est alors courbé de façon à longer le bord du siège 1.

Le diamètre intérieur du fourreau 60 est choisi en fonction du volume occupé par les brides qu'il loge. Ce diamètre est prévu pour être ajusté de façon toutefois à ne pas empêcher le coulissement des brides 50, 51, 52, 53 dans ce fourreau allongé 60.

Ici, le fourreau allongé 60 présente deux bourrelets 62 qui s'étendent en saillie du tube 60A, vers l'extérieur, et qui bordent la fente 61. Ces bourrelets permettent de rigidifier la fente 61 de manière que cette dernière ne s'ouvre pas lorsque cela n'est pas nécessaire (i.e. en l'absence de choc). Ils permettent surtout de faciliter la mise en place du fourreau 60 sur les ossatures d'assise et de dossier le siège 1, dans la position adéquate (avec la fente 61 qui s'ouvre vers le haut et vers l'avant).

En pratique, ce fourreau allongé 60 est fixé au moins sur le bord supérieur de l'un des flancs 12 de l'ossature 11 de l'assise 10.

De façon préférentielle, il se prolonge à l'avant sur la traverse anti-sous-marinage 14. Il s'étend ainsi ici sur la face supérieure de cette traverse, du côté arrière de celle-ci. Il peut être prévu à cet effet une gorge en creux dans cette face supérieure, permettant de loger cette partie du fourreau allongé 60.

De façon préférentielle également, le fourreau allongé 60 se prolonge à l'arrière sur l'un des flancs 22 de l'ossature 21 du dossier 20.

Ici, il ne se prolonge pas sur toute la hauteur de ce flan (jusqu'au point de fixation des brides en haut du dossier). En effet, il n'est pas nécessaire de protéger ces brides en partie haute du dossier, notamment car il n'y est pas prévu d'élément qui serait situé dans la zone haute de déploiement des brides et auxquels ces brides pourraient malencontreusement s'accrocher. Ce n'est bien entendu pas le cas dans la zone basse de déploiement des brides, où l'on trouve notamment les commandes manuelles et/ou électrique des mobilités du siège 1.

Le fourreau allongé 60 est alors fixé à l'ossature 11 de l'assise 10 et à celle du dossier 20. On pourrait envisager différents modes de fixation. Ainsi, le fourreau pourrait être vissé ou riveté sur ces ossatures. En variante, des pions d'encliquetage fixés au fourreau (ou venant de formation avec le fourreau) et adaptés à se clipser dans les ossatures précitées pourraient être prévus à cet effet.

Lors de l'assemblage du siège 1, on pourrait prévoir que les brides soient livrées déjà logés dans les fourreaux 60, 65. Ce n'est toutefois pas ici le cas.

En pratique, les fourreaux 60, 65 sont tout d'abord fixés aux ossatures de dossier et d'assise du siège 1, par les moyens de fixations précités (vis, rivets...).

Pour cela, les fourreaux 60, 65 sont tout d'abord rapportés sur ces ossatures. Les bourrelets 62 permettent alors de garantir une bonne orientation de la fente 61 par rapport à l'assise 10 et au dossier 20, de façon à ce que les brides puissent en sortir sans difficulté.

Les brides 50, 51, 52, 53 et les prétensionneurs sont ensuite rapportés sur ces ossatures. Pour cela, chaque prétensionneur est fixé sous la traverse anti-sous-marinage 14, puis les brides sont ensuite engagées par paires dans les fourreaux 60, 65 en les faisant coulisser le long de ces derniers. Les brides peuvent ensuite être fixées en partie haute de l'ossature 21 du dossier 20, de part et d'autre de l'appui-tête 30.

En cas d'accident, lorsque les prétensionneurs sont déclenchés, ils forcent les brides à coulisser dans les fourreaux 60, 65 et à en sortir, pour qu'elles assurent rapidement leurs fonctions.

Les fourreaux 60, 65 sont en effet conçus pour réduire la friction subie par les brides lors de leur extraction. Ils permettent en outre de guider les brides pour qu'elles passent sur le côté des flasques en plastique rapportés sur les côtés du siège.

La présente invention n'est nullement limitée au mode de réalisation décrit et représenté, mais l'homme du métier saura y apporter toute variante conforme à l'invention. Typiquement, la fente pourrait s'évaser à proximité d'une des extrémités de chaque fourreau, par exemple pour faciliter la mise en place des sangles dans ce fourreau.

Selon une autre variante, le fourreau pourrait présenter une section non pas ronde mais carrée aux coins arrondis.

Selon une autre variante, le fourreau pourrait présenter un tronçon inférieur rigide, par exemple en matière métallique, et un tronçon supérieur souple (notamment au niveau de la jonction entre le dossier et l'assise).

Selon une autre variante, le fourreau pourrait être réalisée entièrement dans une matière rigide s'il ne se prolongeait pas sur le dossier.

## Revendications

1. Siège (1) de véhicule automobile, comportant un dossier (20), une assise (10) qui comprend une ossature (11) recouverte d'une garniture (19), un système de ceinture de sécurité (100) comprenant deux points d'ancrage (100, 103) d'une sangle de ceinture situés de part et d'autre de l'ossature (11) de l'assise (10), et un dispositif de retenue d'un occupant (90) du siège (1) qui comprend :
- au moins un coussin gonflable de sécurité (40, 41) qui, lorsqu'il est gonflé, est adapté à se déployer sur le côté au moins de l'occupant (90), et
- au moins une bride (50, 51, 52, 53) comprenant une extrémité fixée au dossier (20) et une autre extrémité fixée à l'assise (10),
**caractérisé en ce que**, au repos, c'est-à-dire lorsque le coussin gonflable de sécurité (40, 41) n'est pas gonflé, l'un au moins des points d'ancrage (100, 103) ou une partie (105) de sangle de ceinture qui prolonge le point d'ancrage est situé entre la bride (50, 51, 52, 53) et l'ossature de l'assise (10).

2. Siège (1) selon la revendication 1, dans lequel il est prévu au moins un fourreau allongé (60, 65) qui est fixé au moins en partie sur l'assise (10), qui loge au moins en partie ladite bride (50, 51, 52, 53), et qui présente sur une majeure partie de sa longueur une zone d'extraction de ladite bride (50, 51, 52, 53).

3. Siège (1) selon la revendication 2, dans lequel ladite zone d'extraction est formée par une fente (61) qui s'étend sur une majeure partie de la longueur du fourreau allongé (60, 65), et préférentiellement sur l'ensemble de la longueur du fourreau allongé (60, 65).

4. Siège (1) selon la revendication 3, dans lequel le fourreau allongé (60, 65) présente deux bourrelets (62) qui bordent ladite fente (61).

5. Siège (1) selon l'une des revendications 2 à 4, dans lequel le fourreau allongé (60) comporte un corps (60A) qui présente une forme sensiblement tubulaire.

6. Siège (1) selon l'une des revendications 2 à 5, dans lequel le fourreau allongé (60) est fixé en partie au dossier (20).

7. Siège (1) selon la revendication 6, dans lequel, le dossier (20) étant monté mobile par rapport à l'assise (10) de façon à pouvoir basculer sur une course déterminée, le fourreau allongé (60, 65) est réalisé au moins en partie dans un matériau flexible qui se déforme élastiquement uniquement lors du basculement du dossier (20) par rapport à l'assise (10) sur l'ensemble de sa course.

8. Siège (1) selon l'une des revendications 1 à 7, dans lequel l'une des extrémités de la bride (50, 51, 52, 53) est fixée à un prétensionneur.

9. Siège (1) selon l'une des revendications 2 à 8, dans lequel l'ossature (11) de l'assise (10) comprenant deux flancs (12) connectés par des éléments de liaison (12), le fourreau allongé (60, 65) s'étend le long d'un bord supérieur de l'un des deux flancs (12), et préférentiellement aussi sur l'un des éléments de liaison (12).

10. Siège (1) selon l'une des revendications 1 à 9, dans lequel il est prévu deux coussins gonflables de sécurité (40, 41) qui, lorsqu'ils sont gonflés, sont adaptés à se déployer de part et d'autre de l'occupant (90), et au moins deux brides (50, 51, 52, 53) qui sont respectivement couplées aux deux coussins gonflables de sécurité (40, 41), l'autre des points d'ancrage (100, 103) étant situé entre l'autre bride (50, 51, 52, 53) et l'ossature de l'assise (10).

11. Siège (1) selon la revendication 10, dans lequel il est prévu deux fourreaux allongés (60) qui sont fixés au moins en partie sur l'assise (10), respectivement sur deux côtés opposés de l'assise (10) et qui logent respectivement les deux brides (50, 51, 52, 53).

12. Véhicule automobile comportant un plancher, **caractérisé en ce qu'**il comporte un siège (1) conforme à l'une des revendications 1 à 11, monté sur le plancher.

13. Procédé de fabrication d'un siège (1) conforme à l'une des revendications 2 à 9, dont l'assise (10) comporte une ossature (11) recouverte d'une garniture (19), selon lequel le fourreau (60, 65) est fixé à l'ossature (11) de l'assise (10), avant que la bride (50, 51, 52, 53) soit installée dans le fourreau (60, 65), préférentiellement par un mouvement de coulissement de la bride (50, 51, 52, 53) dans ledit fourreau (60, 65).
